# EUROPEAN PATENT APPLICATION

(11) **EP 3 647 964 A1**
(43) Date of publication of application: **06.05.2020**
(21) Application number: 18204387.7
(22) Date of filing: 05.11.2018
(51) Int. Cl.: G06F 16/25

(54) **METHOD FOR BUILDING A DIGITAL REPRESENTATION, METHOD FOR OPERATING A PHYSICAL INSTANCE OF A PRODUCT AND DIGITAL REPRESENTATION OF A PHYSICAL INSTANCE OF A PRODUCT**

(71) Applicant: Atos Information Technology GmbH, 81739 München (DE)
(72) Inventor: SRINIVAS, Murli Mohan, 81735 München (DE); FLEER, Lars, 33154 Salzkotten (DE); SANDEEP, Bhan, 85716 Unterschleißheim (DE)
(74) Representative: Patentanwaltskanzlei WILHELM & BECK

(57) **Abstract**

A method for building a digital representation of a physical instance of a product comprises building a data structure representing a physical structure of the physical instance of the product and mapping a data source to a position on the physical instance.

## Description

The present invention relates to a method for building a digital representation of a physical instance of a product, to a method for operating a physical instance of a product and to a digital representation of a physical instance of a product.

In the state of the art, various digital representations of a product get created in multiple enterprise systems like PLM (product lifecycle management), ERP (enterprise recourse planning), MES (manufacturing execution system), MRO (maintenance, repair and operations). Each of these systems captures a particular aspect of a product like design information, product vendor and contract information, information about a production workload or a maintenance history.

Physical instances of products can be equipped with sensors which deliver data over a data network according to the IoT (Internet of Things) concept. Such data, however, does not provide context information.

It is an object of the present invention to provide a method for building a digital representation of a physical instance of a product. It is a further object of the present invention to provide a method for operating a physical instance of a product. It is a further object of the invention to provide a digital representation of a physical instance of a product. This objectives are achieved by methods and a digital representation according to the independent claims. Preferred embodiments are disclosed in the dependent claims.

A method for building a digital representation of a physical instance of a product comprises building a data structure representing a physical structure of the physical instance of the product and mapping a data source to a position on the physical instance. Advantageously, this method allows for building a digital representation that puts the data source and data provided by the data source in context with the physical structure of the physical instance of the product.

In an embodiment of the method, building the data structure comprises obtaining design information from a first data storage. Advantageously, the method allows to use existing design information stored at a first data storage for building the digital representation of the physical instance of the product.

In an embodiment of the method, the first data storage is a PLM system (product lifecycle management system). Advantageously, the method allows to use existing information stored in a PLM system to build the data structure representing the physical structure of the physical instance of the product.

In an embodiment of the method, building the data structure comprises obtaining maintenance information and/or service information from a second data storage. Advantageously, this method allows to consider existing maintenance information and/or service information for building the data structure representing the physical structure of the physical instance of the product. This allows for building a digital representation of the physical instance of the product that is complete and up-to-date.

In an embodiment of the method, the second data storage is a SLM system (service lifecycle management system) and/or a MRO system (maintenance repair and operations system). Advantageously, this method allows to use existing information stored in a SLM system and/or a MRO system for building a complete and up-to-date data structure representing the physical structure of the physical instance of the product.

In an embodiment of the method, building the data structure comprises obtaining a list of parts installed in the physical instance of the product. Advantageously, this method allows to automatically provide the data structure representing the physical structure of the physical instance of the product with the parts installed in the particular physical instance of the product.

In an embodiment of the method, mapping the data source to a position on the physical instance comprises mapping a sensor ID to a manufacturing product part. Advantageously, this allows to automatically identify the data source with a sensor installed at a particular position of a physical instance of a product.

In an embodiment of the method, the data source is a sensor. The sensor may, for example, be a temperature sensor, a pressure sensor or another type of sensor.

In an embodiment of the method, the data source is a virtual sensor. A virtual sensor may, for example, provide data that is derived from one or more other sensors. The data provided by the virtual sensor may, for example, be derived from the data of other sensors by means of interpolation.

In an embodiment of the method, the data source is designed to send data via a data network. This may allow the physical instance of the product to participate in the Internet of Things. Advantageously, the method for building a digital representation of the physical instance of the product connects the data source in the Internet of Things with a data structure representing a physical structure of the physical instance of the product.

A method for operating a physical instance of a product comprises building a digital representation of the physical instance of the product using a method of the aforementioned kind and managing the physical instance using the digital representation of the physical instance. Advantageously, this method allows to manage the physical instance based on a holistic digital representation of the physical instance of the product and data provided by the data source mapped to a position on the physical instance. This method allows for interpreting data provided by the data source using a rich context of information about the physical instance of the product.

In an embodiment of the method, managing the physical instance comprises obtaining data from the data source. The data may, for example, be obtained via a data network, for example according to the IoT (Internet of Things) concept.

A digital representation of a physical instance of a product comprises a data structure representing a physical structure of the physical instance of the product and a mapping between a data source and a position on the physical instance. Advantageously, this digital twin brings heterogeneous highly structured data from enterprise IT systems and data provided by the data source together. This may allow the digital representation to truly represent a physical instance of the product under several aspects like form, looks, behaviour, features, system relationships and other related data covering several lifecycle phases of the product and its physical instances.

In an embodiment of the digital representation, the data structure comprises a hierarchical representation of components of the product. Advantageously, this allows the data structure to provide information about a relationship between components of the product.

In an embodiment of the digital representation, the data structure comprises information about parts installed in the physical instance of the product. Advantageously, this allows the data structure to provide information about specific parts of the physical instance of the product.

In an embodiment of the digital representation, the data structure comprises information about an environment of the physical instance of the product, a configuration of the physical instance of the product, and/or a lifecycle history of the physical instance of the product. Advantageously, this allows the representation to represent the physical instance of the product in a holistic way under multiple aspects.

In an embodiment of the digital representation, the data source is a sensor. The sensor may, for example, be a temperature sensor, a pressure sensor or another sensor.

In an embodiment of the digital representation, the data source is a virtual sensor. The data source may, for example, be designed to provide data derived from data provided by one or more other sensors or derived from other data. The data source may appear and behave like a real sensor.

In an embodiment of the digital representation, the data source is designed to send data via a data network. Advantageously, this allows the digital representation to connect data describing the physical instance of the product with data provided via the data network, for example via the Internet of Things.

The above-described properties, features and advantages of this invention as well as the way in which they are achieved, will become more clearly and comprehensively understandable in connection with the following description of the exemplary embodiments, which will be explained in more detail in connection with the drawings in which, in schematic representation in each case:
- Figure 1: shows a relation between a product and physical instances of the product;
- Figure 2: shows a hierarchical representation of components of a product;
- Figure 3: shows an example of a physical instance of a product; and
- Figure 4: shows a digital representation of a physical instance of a product.

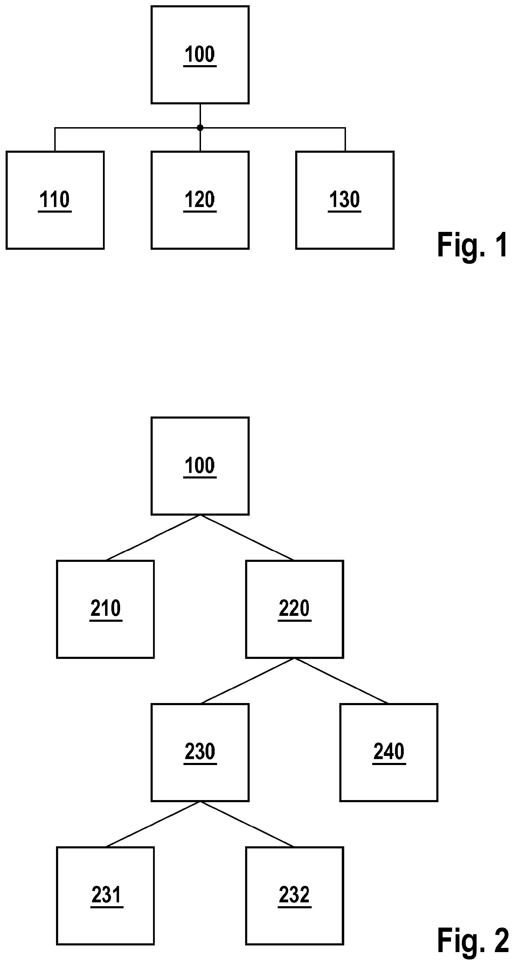

Figure 1 shows a schematic representation of a relation between a product 100 and physical instances of the product 100. In the example depicted in Figure 1, there is a first physical instance 110, a second physical instance 120 and a third physical instance 130 of the product 100, but the number of three physical instances 110, 120, 130 is only by way of example. Typically, there can be any number of physical instances 110, 120, 130 of the product 100. The number of physical instances 110, 120, 130 of the product 100 can vary, depending on the product 100, from one to several hundreds, thousands or millions of physical instances 110, 120, 130.

For example, the product 100 may be a certain car model. In this case, there may be a large number of physical instances 110, 120, 130 of the product 100. Each of those physical instances 110, 120, 130 (individual cars) may be configured individually but all physical instances 110, 120, 130 are based on the same product 100 (car model). In another example, the product 100 may be a wind turbine. In this example, there may be several physical instances 110, 120, 130 of the product 100 installed at different locations around the world.

When the product 100 is developed, produced and sold by a company, the product 100 goes through various lifecycle phases from an ideation phase till a service phase. Such phases may include innovation, prototyping, manufacturing, commissioning and service. During all of these phases, knowledge about the product 100 gets acquired and is commonly stored in different enterprise IT systems using different tools, data formats, identifiers and systematics. IT systems that store information about the product 100 may, for example, include product lifecycle management systems (PLM systems), enterprise resource planning systems (ERP systems), manufacturing execution systems (MES), maintenance, repair and operations systems (MRO systems) and service lifecycle management systems (SLM systems). Each of these IT systems captures particular aspects of the product 100. A PLM system may, for example, hold design information of the product 100. An IRP system may, for example, hold product vendor and contact information related to the product 100. An MES may, for example, hold information about a production work load. An MRO system may hold information about a maintenance history of physical instances 110, 120, 130 of the product 100. Thus, each of those systems contains a slice of knowledge about the product 100 and/or the physical instances 110, 120, 130 of the product 100.

The data and information stored in the various enterprise IT systems mentioned above is usually complex and highly structured.

Figure 2 shows a schematic representation of a hierarchical structure of the product 100. Information about the hierarchical structure depicted in Figure 2 may, for example, be stored in a PLM system. In the example of Figure 2, the product 100 comprises a first component 210 and a second component 220. The second component 220 of the product 100, in turn, comprises a first subcomponent 230 and a second subcomponent 240. This specific structure, however, is chosen only by way of example. The product 100 may have any structure comprising any number of components.

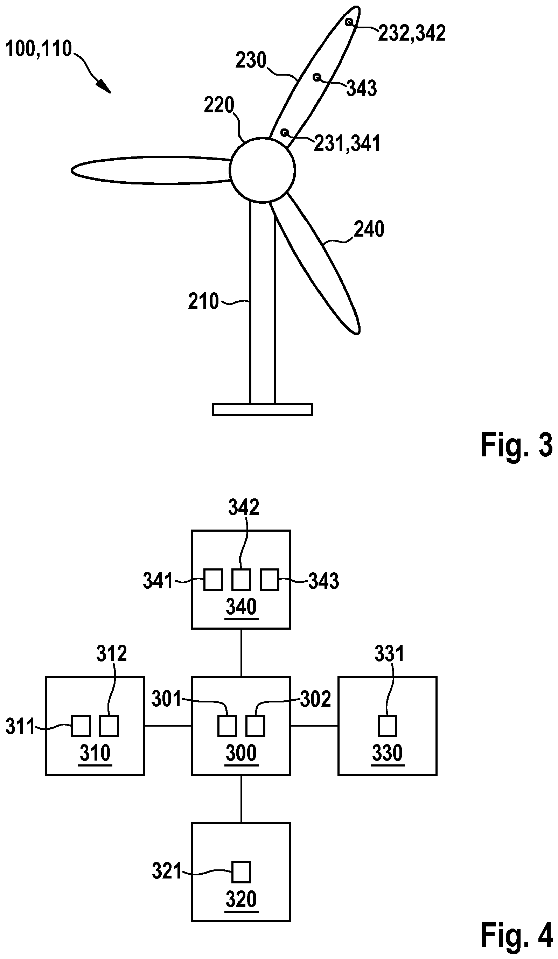

Figure 3 shows a schematic depiction of the first physical instance 110 of the product 100 in an exemplary case in which the product 100 is a wind turbine. In this example, the first component 210 of the product 100 is a pole of the wind turbine. The second component 220 of the product 100 is a rotor of the wind turbine. The first subcomponent 230 of the second component 220 of the product 100 is a first blade of the rotor of the wind turbine. The second subcomponent 240 of the second component 220 of the product 100 is a second blade of the rotor of the wind turbine.

The product 100 may be equipped with one or more sensors located at various positions and on various components of the product 100. The presence of those sensors may qualify the product 100 as being smart.

In the example depicted in Figures 2 and 3, the first subcomponent 230 comprises a first further component 231 and a second further component 232. The first further component 231 is a first sensor arranged at a first position of the first blade of the rotor of the wind turbine. The second further component 232 is a second sensor located at a second position of the first blade of the rotor of the wind turbine. The first sensor and the second sensor may, for example, be temperature sensors, pressure sensors, acceleration sensors, humidity sensors, light sensors or other types of sensors.

Sensors of the product 100 may be designed as data sources capable of sending data via a data network, for example via the internet. This makes the physical instances 110, 120, 130 of the product 100 participants in the Internet of Things (IoT). In the example depicted in Figure 3, the first sensor is a first data source 341 and the second sensor is a second data source 342.

Sensors like the first data source 341 and the second data source 342 typically emit very low structured data streams. Context information is typically not provided by such data sources 341, 342. For example, the data sources 341, 342 may provide no information, along with the emitted data streams, about at which position of which component 210, 220, 230, 240 of which physical instance 110, 120, 130 of the product 100 the respective data source 341, 342 is located. This makes an analysis of the data provided by the data sources 341, 342 difficult and prevents gaining deeper insights about complex interactions, interrelations and dependencies. An increased knowledge about system ontologies and data semantics is also desirable to allow performing artificial intelligence and machine learning.

Figure 4 shows a schematic depiction of a digital representation 300 of the first physical instance 110 of the product 100. The digital representation 300 may be stored in digital form in a computer system. The digital representation 300 may comprise a plurality of data stored locally in a data storage or distributed in a plurality of data storages. The digital representation 300 may also include links to other data stored externally to the digital representation 300.

The digital representation 300 of the first physical instance 110 of the product 100 aims to represent the first physical instance 110 of the product 100 as exhaustively as possible. This end, the digital representation 300 holds both information about the product 100 and about the first physical instance 110. The digital representation 300 may also hold information about other physical instances 120, 130 of the product 100 or may comprise links to digital representations 300 of those physical instances 120, 130 of the product 100. The digital representation 300 may also be referred to as a digital twin of the first physical instance 110 of the product 100.

The digital representation 300 of the first physical instance 110 of the product 100 comprises a data structure 301 that represents a physical structure of the first physical instance 110 of the product 100. Building the digital representation 300 includes building that data structure 301.

In the example depicted in Figures 2 and 2, the data structure 301 representing a physical structure of the first physical instance 110 of the product 100 may, for example, comprise a hierarchical representation of the components 210, 220, 230, 231, 232, 240 of the product 100.

The hierarchical representation of the components 210, 220, 230, 231, 232, 240 of the product 100 may be a part of a design information 311 related to the product 100 which may be available in a first data storage 310. The first data storage 310 may, for example, be a product lifecycle management system (PLM system). Building the data structure 301 in order to build the digital representation 300 may comprise obtaining the design information 311 from the first data storage 310.

Obtaining the design information 311 from the first data storage 310 may include transforming the data of the design information 311 between different data formats. Obtaining the design information 311 from the first data storage 310 may also include mapping different identifiers used in different IT systems and in different representations of the product 100 and of the first physical instance 110 of the product 100 to one another.

It is convenient to build the data structure 301 of the digital representation 300 such that design information 311 obtained from the first data storage 310 is not duplicated in the data structure 301. Linking the data structure 301 to the design information 311 transparently may make it easier to keep the data structure 301 and the design information 311 synchronised.

Building the data structure 301 may also comprise obtaining a list of parts 312 installed in the first physical instance 110 of the product 100. The list of parts 312 may, for example, have the form of a bill of materials (BOM). The list of parts 312 may, for example, be obtained from the first data storage 310 that also provides the design information 311. The list of parts 312 may, however, also be obtained from another data storage. Obtaining the list of parts 312 installed in the first physical instance 110 of the product 100 allows to provide the data structure 301 of the digital representation 300 with information about parts installed in the first physical instance 110 of the product 100.

Building the data structure 301 may also comprise obtaining maintenance information 321 related to maintenance operations carried out on the first physical instance 110 of the product 100 from a second data storage 320. The second data storage 320 may, for example, be a maintenance, repair and operations system (MRO system). Building the data structure 301 may also comprise obtaining service information 331 related to service operations carried out on the first physical instance 110 of the product 100 from a third data storage 330. The third data storage 330 may, for example, be a service lifecycle management system (SLM system).

The data structure 301 of the digital representation 300 may comprise further information related to the first physical instance 110 of the product 100. This further information may be obtained from the first data storage 310, the second data storage 320, the third data storage 330 or from other IT systems.

The further information may, for example, include information about an environment of the first physical instance 110 of the product 100. Such information may, for example, include a location of the first physical instance 110 of the product 100, information about the weather at the location of the first physical instance 110, information about field conditions at the location of the first physical instance 110, for example a temperature, a humidity or a surface condition, and information about an industry in which the first physical instance 110 of the product 100 is deployed.

The further information included in the data structure 301 may also comprise information about a configuration of the first physical instance 110 of the product 100, or an information about settings chosen on the first physical instance 110 of the product 100.

The further information included in the data structure 301 may also comprise information about a lifecycle history of the first physical instance 110 of the product 100, for example information about the production process of the first physical instance 110 and information about service and repair operations of the first physical instance 110 of the product 100.

The further information included in the data structure 301 may also comprise information about physical properties of the first physical instance 110, the components 210, 220, 230, 231, 232, 240 of the first physical instance 110 of the product 100 and/or the parts installed in the first physical instance 110. Such information may include information about a material, a build, a design, a shape, a size, a weight or about other physical properties.

The further information included in the data structure 301 may also include information about a behaviour of the first physical instance 110, for example about a mechanical, an electronical or a thermo-dynamical behaviour, information about design constraints, design simulation models, information about similar product patterns or information about generic or universal rules.

The further information included in the data structure 301 may also comprise information about a context of the first physical instance 110 of the product 100. Such information may, for example, include supplier information, service conditions, event information or a maintenance record.

Building the data structure 301 of the digital representation 300 from the information and items named above may include transforming data obtained from external data storages to different data formats. It may also include mapping different identifiers and keys used in different data storages 310, 320, 330 and IT systems to one another. It is convenient to not copy and duplicate data obtained from data storages 310, 320, 330 and other IT systems but to create links to the external data to allow for maintaining data consistency. Building the data structure 301 of the digital representation 300 involves a combination of data combination, transformation and semantic enrichment to map related aspects of the first physical instance 110 of the product 100 described in different data storages 310, 320, 330 without duplicating all the related data.

In the example described along with Figures 1 to 3, the first physical instance 110 of the product 100 includes the first data source 341 and the second data source 342. In the specific example, the first data source 341 is realised by the first further component 231 of the first subcomponent 230 of the second component 220 of the product 100, which, in the specific example, may be a first sensor arranged at a first position on the first blade of the rotor of the wind turbine. The second data source 342 is realised by the second further component 232, which, in the specific example, may be a second sensor arranged at a second position on the first blade of the rotor of the wind turbine. The number of two data sources 341, 342 is only chosen by way of example, however. The first physical instance 110 of the product 100 may comprise any number of data sources 341, 342.

The first data source 341 and the second data source 342 are designed to send data via a data network 340. The data network 340 may be the internet. The first data source 341 and the second data source 342 may conform to the Internet of Things (IoT) concept.

Data emitted by the first data source 341 and the second data source 342 may be low structured and not provide context information. In order to allow for interpreting and using the data emitted by the first data source 341 and the second data source 342, it is necessary to put that data into context. The context may include the information that the first data source 341 and the second data source 342 are located on the first physical instance 110 of the product 100. The context may include further information about the specific location of the first data source 341 and the second data source 342 on the first physical instance 110 of the product 100. The context may also include data sent earlier by the first data source 341, the second data source 342 or other data sources, information about the environment of the first physical instance 110 and other information related to the first physical instance 110 of the product 100.

The digital representation 300 of the first physical instance 110 of the product 100 serves to provide this context for the data delivered by the first data source 341 and the second data source 342. To this end, the digital representation 300 comprises a mapping 302 between the first data source 341 and the second data source 342 and their specific positions on the first physical instance 110 of the product 100. The mapping 302 is created when the digital representation 300 is built.

The mapping 302 may be created from the same data as used for building the data structure 301. Creating the mapping 302 may, for example, include mapping a sensor ID to a manufacturing product part. The sensor ID may be an ID included in the data sent by the first data source 341 or the second data source 342 via the data network 340. The manufacturing product part may be a part number included in the list of parts 312 or in another part list or in a bill of materials.

The digital representation 300 may include a mapping of further data sources to positions on the first physical instance 110 of the product 100. In the example depicted in Figure 3, the first physical instance 110 of the product 100 includes a third data source 343 which is a virtual sensor.

As a virtual sensor, the third data source 343 is not realised by a physical component of the first physical instance 110 of the product 100. Nonetheless, the third data source 343 can be mapped to a specific position on the first physical instance 110. In the example depicted in Figure 3, the third data source 343 is located between the first further component 231 (first sensor) realising the first data source 341 and the second further component 232 (second sensor) realising the second data source 342 on the first subcomponent 230 (first blade) of the second component 220 (rotor) of the first physical instance 110 of the product 100 (wind turbine).

As a virtual sensor, the third data source 343 may provide data that is generated from the data of other data sources. In the example, the third data source 343 provides data that is generated by interpolation from data provided by the first data source 341 and the second data source 342.

The generation of the data provided by the third data source 343 may take place in the first physical instance 110 of the product 100. In this example, the third data source 343 may provide data over the data network 340 like the first data source 341 and the second data source 342. In this case, the third data source 343 behaves like a normal data source even if the third data source is a virtual sensor. In another example, the generation of the data of the third data source 343 may take place in the digital representation 300 of the first physical instance 110 of the product 100.

The digital representation 300 may include other external data sources mapped to the data structure 301 of the digital representation 300. Such external data sources may for example provide context information like climate data or weather data.

Once the digital representation 300 of the first physical instance 110 of the product 100 has been built, the first physical instance 110 of the product 100 can be managed using the digital representation 300. Managing the first physical instance 110 of the product 100 may include obtaining data from the first data source 341 and/or the second data source 342.

The digital representation 300 of the first physical instance 110 of the product 100 provides context information for the data obtained from the data sources 341, 342 that helps with interpreting and using said data.

Data obtained from the data sources 341, 342 may, for example, allow to recognise that a component of the first physical instance 110 of the product 100, for example the first subcomponent 230, is defect or will fail soon. Additional information provided by the digital representation 300, for example data concerning the environment of the first physical instance 110, may allow to analyse the reason of the failure of the component of the first physical instance 110. Service and/or maintenance data provided by the digital representation 300 related to the particular component of the first physical instance 110 of the product 100 may provide further insights.

The semantically rich information provided by the digital representation 300 may allow to apply artificial intelligence and/or machine learning patterns to identify and analyse complex patterns and relations.

The invention has been illustrated and described in detail with the aid of the preferred exemplary embodiments. The invention is nevertheless not restricted to the examples disclosed. Rather, other variants may be derived therefrom by a person skilled in the art without departing from the protective scope of the invention.

### Reference List

- 100: product
- 110: first physical instance
- 120: second physical instance
- 130: third physical instance

- 210: first component (pole)
- 220: second component (rotor)
- 230: first subcomponent (blade 1)
- 231: first further component (sensor 1)
- 232: second further component (sensor 2)
- 240: second subcomponent (blade 2)

- 300: digital representation
- 301: data structure
- 302: mapping

- 310: first data storage
- 311: design information
- 312: list of parts

- 320: second data storage
- 321: maintenance information

- 330: third data storage
- 331: service information

- 340: data network
- 341: first data source (first sensor)
- 342: second data source (second sensor)
- 343: third data source (virtual sensor)

## Claims

1. Method for building a digital representation (300) of a physical instance (110) of a product (100) comprising:
- building a data structure (301) representing a physical structure of the physical instance (110) of the product (100);
- mapping a data source (341, 343) to a position on the physical instance (110).

2. The method of claim 1,
wherein building the data structure (301) comprises:
- obtaining design information (311) from a first data storage (310).

3. The method of claim 2,
wherein the first data storage (310) is a PLM system.

4. The method of one of the previous claims,
wherein building the data structure (301) comprises:
- obtaining maintenance information (321) and/or service information (331) from a second data storage (320, 330).

5. The method of claim 4,
wherein the second data storage (320, 330) is a MRO system and/or a SLM system.

6. The method of one of the previous claims,
wherein building the data structure (301) comprises:
- obtaining a list of parts (312) installed in the physical instance (110) of the product (100).

7. The method of one of the previous claims,
wherein mapping the data source (341, 343) to a position on the physical instance (110) comprises
- mapping a sensor ID to a manufacturing product part.

8. The method of one of the previous claims,
wherein the data source (341) is a sensor.

9. The method of one of claims 1 to 7,
wherein the data source (343) is a virtual sensor.

10. The method of one of the previous claims,
wherein the data source (341, 343) is designed to send data via a data network (340).

11. Method for operating a physical instance (110) of a product comprising:
- building a digital representation (300) of the physical instance (110) of the product (100) using a method according to one of the previous claims;
- managing the physical instance (110) using the digital representation (300) of the physical instance (110).

12. The method of claim 11,
wherein managing the physical instance (110) comprises:
- obtaining data from the data source (341, 343).

13. Digital representation (300) of a physical instance (110) of a product (100) comprising
- a data structure (301) representing a physical structure of the physical instance (110) of the product (100);
- a mapping (302) between a data source (341, 343) and a position on the physical instance (110).

14. Digital representation (300) according to claim 13,
wherein the data structure (301) comprises a hierarchical representation of components (210, 220, 230, 231, 232, 240) of the product (100).

15. Digital representation (300) according to one of claims 13 and 14,
wherein the data structure (301) comprises information about parts installed in the physical instance (110) of the product (100).

16. Digital representation (300) according to one of claims 13 to 15,
wherein the data structure (301) comprises information about
- an environment of the physical instance (110) of the product (100),
- a configuration of the physical instance (110) of the product (100),
and/or
- a lifecycle history of the physical instance (110) of the product (100).

17. Digital representation (300) according to one of claims 13 to 16,
wherein the data source (341) is a sensor.

18. Digital representation (300) according to one of claims 13 to 16,
wherein the data source (343) is a virtual sensor.

19. Digital representation (300) according to one of claims 13 to 18,
wherein the data source (341, 343) is designed to send data via a data network (340).
